# EUROPEAN PATENT APPLICATION

(11) **EP 4 530 267 A1**
(43) Date of publication of application: **02.04.2025**
(21) Application number: 24200466.1
(22) Date of filing: 16.09.2024
(51) Int. Cl.: C03B 23/09

(54) **HOT FORMING TOOL FOR GLASS BOTTLE NECKS**

(30) Priority: 28.09.2023 EP 23200284
(71) Applicant: SCHOTT Pharma AG & Co. KGaA, 55122 Mainz (DE)
(72) Inventor: HUMBERTJEAN, Alexander, 79379 Müllheim (DE); WÖHRLE, Norbert, 79379 Müllheim (DE); KUMMER, Hanspeter, 79379 Müllheim (DE)
(74) Representative: Schott Corporate IP

(57) **Abstract**

Forming tool for glass forming in particular for forming bottle necks, with an axial central mounting section, provided with a flange, with forming surfaces on the flange where the forming surfaces are at an angle with a surface perpendicular to the axial axis of the mounting section, wherein the angle (X) is between 5-15 degrees.

## Description

The invention relates to a hot forming tool for glass products in particular for medical use, such as a vial, bottle, cartridge and the like. In particular, the invention relates to forming glass products out of a cylindrical glass tube, where the invention further relates to the forming of one open end of the glass tube, for example the neck of a bottle, vial, or cartridge or the like.

Methods are known from the prior art in which glass articles are produced by a forming process from a workpiece, also referred to as a semi-finished product. Thus, glass vials are produced for example for pharmaceutical applications from a glass tube, in that a short tubular section at one end is heated to the shaping temperature of the glass and is brought into the desired shape in one or more shaping steps by suitable forming tools. The internal geometry is usually formed with plugs that are introduced into the tube end. The workpiece rotates during the shaping process. The shape and dimensions of the plug define the internal geometry of the glass vial. The forming takes place by way of outer forming dies that press the glass tube against the plug and simultaneously shape the outer side of the glass tube. In the process, the glass tube and the outer forming die rotate or is indexed. The outer forming die comprises a shaping surface. An example of such methods and known tools are described in US patent application US 2020/0354255 and European patent application EP 3 677 554.

Furthermore, such methods and tools are described in US 2021/0363045 A1. In this document it is disclosed that a portion of the intermediate glass product is heated to a predetermined temperature. A tool and the heated portion of the intermediate glass product are brought into contact. Under a state that a tool contacts the heated portion, at least one of the tool and the intermediate glass product is rotated so that the tool and the intermediate glass product relatively rotate, wherein a part of the tool that contacts the heated portion comprises or is made of glassy carbon.

US 2021/0276912 A1 refers to a method for shaping the mouth of a hollow precursor made of glass, as well as glass produced thereby. The method includes heating the mouth of the hollow precursor; introducing a mandrel along a first direction into the mouth while the hollow precursor is rotating; and pressing shaping rollers along a second direction on an outside of the mouth while the hollow precursor is rotating with the mandrel in the mouth.

However, the known tools, and in particular the plug, limit the geometries that can be achieved reliably. In particular for vial neck geometries that are required for high precision applications, like for containers used for medical purposes, the current tools are not adequate. It is therefore a goal of the invention to provide a tool that more reliably can form accurate geometries.

By providing a tool according to claim 1, accurate geometries can be obtained. By having a slanted forming surface, with an angle (X) between the forming surface and a surface perpendicular to the axial axis of the mounting section, wherein the angle (X) is between 5-15 degrees, the moldable glass can be easily deformed and distributed within the form. In particular, glass geometries can be formed that have thin cross sections. Furthermore, by providing a tool according to claim 1, the inventors found that geometries with a narrow cross section, that is a thin glass wall, can be formed without risking the form not being fill out fully. Therefore, the edge or contour of the produced object is better filled, resulting in fewer rejects. Additionally, the inventors found that by using a tool according to claim 1, it is possible to reduce the force acting on the glass, which leads to a gentler shaping of the vial collar contour. Especially the slanted forming surface, with an angle (X) between the forming surface and a surface perpendicular to the axial axis of the mounting section, wherein the angle (X) is between 5-15 degrees, and optionally the phases 64 and 63 ensure that the glass accumulates better in the middle of the inner contour of the collar surface and there are fewer defects and imbalances detectable in the obtained product. Finally, due to the slanted forming surface, with an angle (X) between the forming surface and a surface perpendicular to the axial axis of the mounting section, wherein the angle (X) is between 5-15 degrees the mold release agent can drain off better and no additional drain in the form of a groove is necessary.

Further aspects of the invention are described below with reference to the figures, in which
Fig. 1 shows an example of a hot forming glass apparatus,
Fig. 2 shows an example of a hot forming glass apparatus,
Fig. 3 shows an example of a forming tool according to the invention,
Fig. 4 shows an example of a forming tool according to the invention in top view, and
Fig. 5 shows an example of a forming tool according to the invention in section according to the line A-A in fig 4.

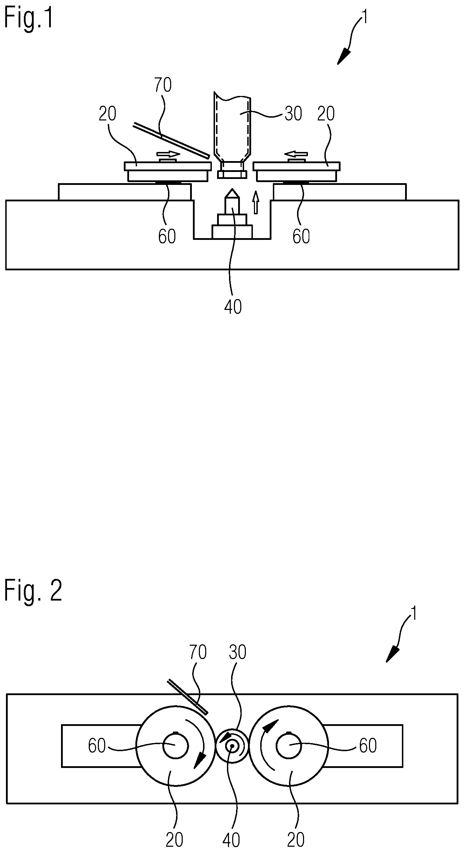

Figures 1 and 2 schematically illustrate an apparatus 1, known from the prior art, for hot forming of glass containers. In this case, Figure 1 shows the side view and Figure 2 shows a plan view. The apparatus has an inner forming tool 40 (also referred to in the art as plug), which forms the inner lateral surface of a glass tube 30. The forming tool 40 in Fig. 1 and 2 is a schematic representation. The outer shaping rollers 20 are mounted in a rotatable manner in the mounting suspension 60. Furthermore, the apparatus has a gas flame 70 for optionally heating the glass vial blank 30. The glass tube 30 is heated up to a temperature that makes the glass material formable. This heating up can be performed outside the forming tool and be optionally assisted by the gas flame 70 if desired. The temperature to which the glass is heated depends on the specific type of glass used and is typically in the range of T_{g} + 200°C to T_{g} + 600°C (wherein T_{g} is the transition temperature of the glass). During the forming process, the glass tube 30 is rotated. The forming tools 40 and 20 move towards the glass tube blank 30 to be formed. Since the outer forming tools 20 are mounted in a rotatable manner, they are likewise set in rotation by the rotary movement of the glass tube 30. Note that the forming tool 40 can be either fixed in place or be rotatable along the axial directing. Furthermore, during the forming of the outer lateral surface of the glass tube 30, the entire lateral surface of the outer shaping roller 20 passes into contact with the hot glass tube 30. The interaction of the inner shaping tool 40 and the outer shaping rollers 20 with the glass tube form the final geometry of the glass tube 30. This results in the final geometry of the opening of the tube. Note that the invention is not limited to this implementation of the apparatus 1, and the forming tool can be used in other suitable forming machines, where a relative rotation between the forming tool 40 and the container to be formed is realized.

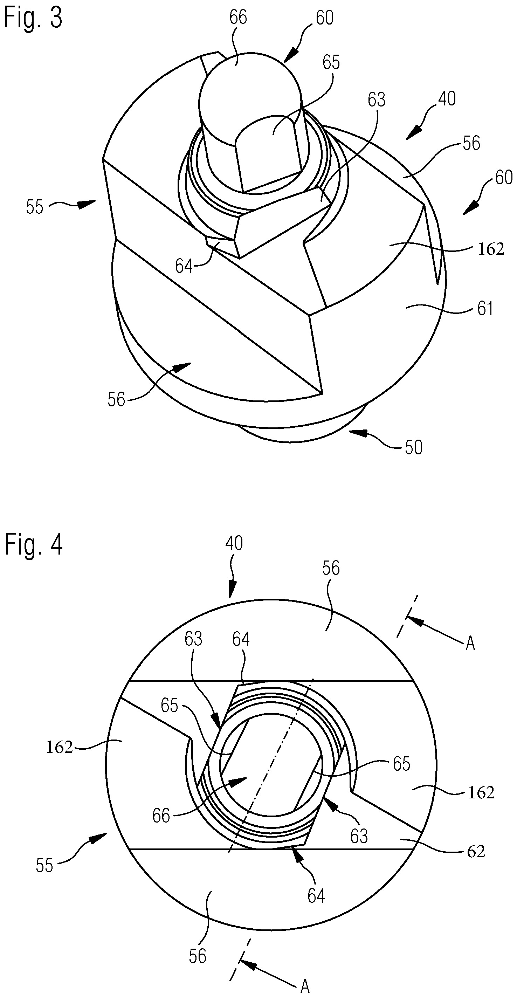

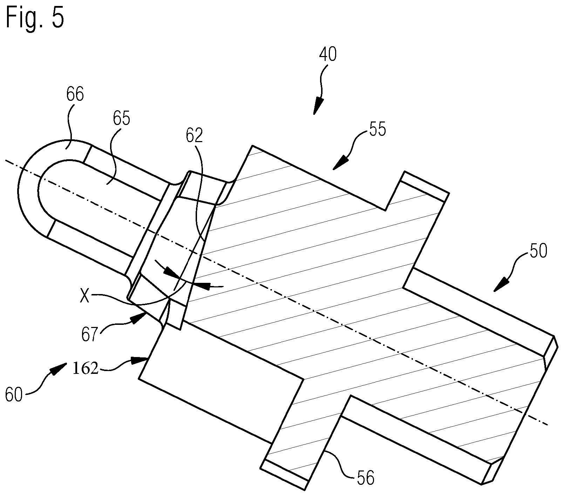

In Fig. 3 an example of a tool 40 according to the invention is shown. Fig. 3 shows a three-dimensional view, in Fig. 4 a top view is shown, and in Fig. 5 a cross section of the tool 40 is shown according to the section line A-A as indicated in Fig. 4.

The tool 40 has a base mounting shaft 50 that can engage with a production machine, like the one shown in Figs. 1 and 2. The mounting shaft 50 mounts securely on the production machine 1 which has an according coupling system. Such mounting mechanisms are known in the art. On top of the mounting shaft is a mounting ring 55. The ring 55 is provided with cut outs. The ring 55 forms together with the mounting shaft 50 a mounting system 56 also known as mounting section. On top of the mounting ring 55, a forming section 60 is mounted, therefore on the distal end of the mounting system 56.

The forming section 60 comprises the flange (61), which contacts the glass during forming. The flange (61) has two flat forming surfaces also described as planar end surfaces 162. The end surfaces 162 are perpendicular to the center axis of the tool 40. Adjacent to the end surfaces 162 are two forming ramps 62. The ramps 62 have preferably a slope X of 10 degrees compared to the planar end surfaces 162.

On top of the mounting ring 55 and starting at the level of the end surfaces 162, a ring forming section 67 is located. The ring forming section 67 is concentrical with the center axis of the tool 40. The ring forming section 67 has cut out sections 63 and 64.

On top of the ring forming section 67 is located a top forming section 66 located concentrically with the center axis of the tool 40. The topmost section of the top forming section 66 is dome shaped in this example. The top forming section 66 is provided with two cutouts 65, extending in axially in the wall section of the top forming section 66. The cutouts 65 are facing to the corresponding cut out sections 63.

In use, the glass vial 30 to be formed is heated up to the temperature that makes the glass formable, so that it is a semi liquid state and can be formed into a specific shape. When the tool 40 is moved into position and engages with the opening of the glass vial, the top section 60 is inserted coaxially into the glass vial 30. The planar forming surfaces 162 engage with the glass vial 30. At the same time, the forming rollers 20 also engage the vial 30 at the outside. Preferably, the surfaces that come into contact with the glass are coated or rinsed with a mold release agent before or during the forming process. According to a preferred embodiment the mold release agent is an oil. Such oils are known to experts and commercially available. Due the rotation of the glass vial 30, the formable glass of the vial 30 is engaging with the ramps 62, as well as with the cutout sections 63 and 64, under the pressure generated between the forming tool 40 and the forming rollers. The ramps 62 push the now formable, semi liquid glass within the forming space formed by the forming tool 40 and the forming rollers to move the glass mass into the shape. The cutout sections 63 and 64 in addition engage with the flowing glass and further direct and push the glass material through the forming space. Due to the ramps 62 the glass can be moved around more efficiently throughout the forming space, with further assistance from the cutout sections 63 and 64 which further distribute the glass throughout the forming space. By more efficiently pushing the glass throughout the forming space, complete filling out of the forming space can be ensured. With the tool according to the invention, complex geometries can be formed. In particular, geometries with a narrow cross section, that is a thin glass wall, can be formed without risking the form not being fill out fully.

The angle of the surface 63 is about 60 - 70°. The surface 64 ends in the middle of the plug (angle 20-30°). The inclined position of the plug and the phases 63 and 64 reduces the contact area with the forming tools. This reduces the force acting on the glass. This leads to a gentler shaping of the vial collar contour. The phases 64 and 63 ensure that the glass accumulates better in the middle of the inner contour of the collar surface and there are fewer defects and imbalances. In the example, the slope X of the ramps 62 is 10 degrees. However, the invention can be implemented with slopes X between 5-15 degrees. The angle can be chosen depending on the flow characteristics of the specific glass used and the required geometry. The forming tool according to claim 1, and especially the specific geometry of the forming tool results in improved production method of the glass vials and might also result in improved glass vials. Due to the specific geometry, the moldable glass can be easily deformed and distributed within the form, resulting in glass geometries that have thin cross sections. The risk of prior art forming tools that the form is not being fill out fully can be reduced by the specific geometry of the forming tool according to claim 1. Therefore, the edge or contour of the produced object is better filled, resulting in fewer rejects. Additionally, the inventors found that due to the slanted forming surface, with an angle (X) between the forming surface and a surface perpendicular to the axial axis of the mounting section, wherein the angle (X) is between 5-15 degrees, the mold release agent, especially the oil can drain off better. Therefore, no additional drain, for example in the form of a groove is necessary which is advantageous since such a drain can easily become clogged with glass or black carbon during production of the glass vials, which leads to expensive cleaning work and downtime.

In a further example of the invention, the ring forming section 67 is concentrical with the center axis of the tool 40 and does not contain the cut-out sections 63 and 64. In this case the ring forming section is cylindrical. In use, the ramps 62 still function as described before, with minor loss of the additional forming functions of the sections 63 and 64. The tool according to this example is easier to manufacture. In a further example of the invention, the ring forming section 67 is provided with the section 63 but leaves out the section 64. This has improved flow direction effects, while keeping the manufacturing costs lower.

In a further aspect of the invention, an additional heater, for example a gas flame 70 as shown in Fig. 1 can be used to heat the glass before and/or during forming. This improves the temperature control of the glass during forming and provides additional ease of flow of the glass when being formed.

The tool can be assembled from multiple parts, but preferably the tool is formed out of a single work piece to improve strength and reliability as no parts can come loose during use. Such a single piece construction also has the advantage to reduce vibrations in use. For example, the plug can be made out of a hardened highspeed steel.

Additional embodiments of the present invention:
According to a first embodiment a forming tool for glass forming s provided comprising an axial central mounting section (56), provided with a flange (61), with forming surfaces (62) on the flange (61) characterized in that the forming surfaces (62) are at an angle (X) with a surface perpendicular to the axial axis of the mounting section.

According to a second embodiment a forming tool according to the first embodiment is provided, wherein the angle (X) is between 5-15 degrees.

According to a third embodiment a forming tool according to the second embodiment is provided, wherein the angle (X) is 10 degrees.

According to a fourth embodiment, a forming tool according to any of the embodiments 1 to 3 is provided, further provided with a second forming surface (63). According to a fifth embodiment, a forming tool according to embodiment four is provided, further provided with a third forming surface (64).

According to a sixth embodiment, a forming tool according to any of the preceding embodiment is provided, wherein the tool is formed of a single work piece. According to a seventh embodiment, a forming tool for forming the inner geometry of a glass container comprising a mounting section provided with a forming section where an outer surface is adapted to provide an inner geometry for the glass container when rotated along a vertical axis wherein the forming section is provided with ramping sections that are under an angle of between 85-75 with the vertical axis.

## Claims

1. Forming tool for glass forming comprising
an axial central mounting section (56), provided with a flange (61), with forming surfaces (62) on the flange (61) **characterized in that**
the forming surfaces (62) are at an angle (X) with a surface perpendicular to the axial axis of the mounting section, wherein the angle (X) is between 5-15 degrees.

2. Forming tool according to claim 1, wherein the angle (X) is 10 degrees.

3. Forming tool according to any of the preceding claims, further provided with a second forming surface (63).

4. Forming tool according to claim 3, further provided with a third forming surface (64).

5. Forming tool according to any of the preceding claims, wherein the tool is formed of a single work piece.

6. Forming tool for forming the inner geometry of a glass container comprising a mounting section provided with a forming section where an outer surface is adapted to provide an inner geometry for the glass container when rotated along a vertical axis wherein the forming section is provided with ramping sections that are under an angle of between 85-75 degrees with the vertical axis.
